# EUROPEAN PATENT SPECIFICATION

(11) **EP 1 162 077 B1**
(45) Date of publication and mention of the grant of the patent: **30.08.2006**
(21) Application number: 01304115.7
(22) Date of filing: 08.05.2001
(51) Int. Cl.: B41M 5/00, C09D 179/02

(54) **Coated material comprising a porous substrate**
Beschichtetes Material umfassend einen porösen Träger
Matériau revêtu comprenant un substrat poreux

(30) Priority: 17.05.2000 US 572550
(43) Date of publication of application: 12.12.2001
(73) Proprietor: EASTMAN KODAK COMPANY, Rochester, New York 14650 (US)
(72) Inventor: Botros, Raouf, Centerville, Ohio 45459 (US)
(74) Representative: Weber, Etienne Nicolas

(56) References cited:
- EP-A- 0 822 237

## Description

### Technical Field

The present invention relates to ink jet printing and, more particularly, to the application of black and color inks to a specialty coated substrate for achieving enhancement in permanence and image quality.

### Background Art

In continuous ink jet printing, ink is supplied under pressure to a manifold region that distributes the ink to a plurality of orifices, typically arranged in a linear array(s). The ink discharges from the orifices in filaments which break into droplet streams. The approach for printing with these droplet streams is to selectively charge and deflect certain drops from their normal trajectories. Graphic reproduction is accomplished by selectively charging and deflecting drops from the drop streams and depositing at least some of the drops on a print receiving medium while other of the drops strike a drop catcher device. The continuous stream ink jet printing process is described, for example, in U.S. Pat. Nos. 4,255,754; 4,698,123 and 4,751,517, the disclosures of each of which are totally incorporated herein by reference.

Achieving improvement in permanence and darkness of ink jet print remains a top priority in the printing business. For ink jet business to grow in the graphic arts, textiles, lottery, business forms and publishing industries, significant improvement in water resistance and darkness of the image must be demonstrated.

Substrate manufacturers produce many ink-jet grade substrates using coated components. Coated components, such as amorphous and precipitated silicas, vary in particle sizes and their distribution. Multivalent cross linking, often cationic, components include specialty treated high-bulk oxides of metals such as aluminum, titanium, zirconium, lanthanum, magnesium; modified starches; water soluble polymeric binders, such as hydrolyzed PVA; and resins. Depending on the composition and methods of coating, such substrates yield varying degrees of dot gain, brightness, optical density rate of absorption or drying, and water resistance of the ink-jetted image.

The use of hydroxyalkylated polyethyleneimine (EPI) in ink jet inks has been shown to significantly improve waterfastness of the inks, as disclosed in EP 0 822 237, which discloses an ink jet ink comprising a liquid vehicle, a dye, a hydroxyalkylated polyethyleneimines, and an ammonium salt. However, polymeric inks, used to improve permanence of an image, do not run in the printer as well as non-polymeric inks, and require more frequent system maintenance. Furthermore, non-black inks achieve only modest improvement in water resistance with EPI, probably due to extreme solubility of the non-black color dyes.

Waterfastness of printed images may be achieved through ink formulation. The use of pigments, for example, versus soluble dyes, may produce permanent images due to their insolubility in water. Pigments, however, have very poor redispersability once the ink dries on the orifice plate or charge leads. This is detrimental to good runnability in a continuous ink jet printer. Another approach is to use water soluble dyes in the presence of polymers. However, viscosity limitations on ink jet inks (1.0 - 1.5 centipoise) do not permit adding enough polymer to obtain near 100% permanence without exceeding the viscosity limitation. This becomes very critical in the case of very water soluble dyes which require exceedingly more polymer for fixation.

It is seen then that there is a need for an improved method of optimizing waterfastness in an aqueous, black or non-black, dye- base ink.

### Summary of the Invention

This need is met by the coated material according to the present invention, wherein enhancement in permanence of black and specialty non-black color ink jet prints is achieved. Rather than applying the polymer solution to the ink, the polymer solution is applied to the substrate as a pre- or post-coating. This has the advantage of allowing enough polymer to be used without adversely affecting the runnability of the ink. Furthermore, the ink formulations will remain simple and have a better chance of running well in ink jet systems. The coated material of the present invention can be applied to the porous substrate as a pre-print coating or a post-print coating.

In accordance with one aspect of the present invention, a coated material comprises a porous substrate,for use with an inkjet printing system, which material is obtainable by applying a coating composition to the porous substrate before or after printing images on the substrate, in order to enhance the permanence of ink jet imaging on the material, the coating composition comprising a liquid vehicle, an ethoxylated polyethyleneimine polymer, a surfactant and an electrolyte. When the coating material is applied to the porous substrate, waterfast prints are produced which are resistant to smudging or bleeding when subjected to moisture. Other objects and advantages of the invention will be apparent from the following description and the appended claims.

### Detailed Description of the Invention

The present invention proposes a coated material comprising a porous substrate. The application to the porous substrate of a coating composition may occur before or after printing, using any suitable application means such as spraying. The coating material is particularly advantageous for use on a porous substrate, including a textile-, paper- or pulp-based substrate. The substrate coating enhances the permanence of ink jet imaging on the substrate to produce waterfast prints resistant to smudging or bleeding even when subjected to moisture.

In accordance with the present invention, the coating composition comprises an aqueous solution of a polymer, a surfactant and an electrolyte. The polymer cross-links to the dye in the ink jet ink. The surfactant enhances the wetting of the coating to the substrate. The electrolyte lowers the solubility of the ink into the coating.

The following examples illustrate various formulations for the pre- or post-coating solution for use in the present invention, and the resultant effectiveness of each embodiment.

**Example 1**

| | |
|---|---|
| Ethoxylated Polyethyleneimine (20% solution) | 5.0% |
| Surfynol 465 | 0.3% |
| Deionized water | 94.7% |

**Example 2**

| | |
|---|---|
| Ethoxylated Polyethyleneimine (20% solution) | 5.0% |
| Surfynol 104E | 0.05% |
| Sodium Sulfate | 1.0% |
| Deionized Water | 93.95% |

**Example 3**

| | |
|---|---|
| Ethoxylated Polyethyleneimine (20% solution) | 5.0% |
| Surfynol TGE | 0.1% |
| Ammonium Sulfate | 1.0% |
| Deionized Water | 93.9% |

**Example 4**

| | |
|---|---|
| Ethoxylated Polyethyleneimine (20% solution) | 5.0% |
| Surfynol 440 | 0.1% |
| Ammonium Sulfate | 1.0% |
| Isopropyl Alcohol | 2.0% |
| Deionized Water | 91.9% |

To determine the effectiveness of the solutions in each example above, three different types of substrate boards (Kraft, white top and chemi) were sprayed with solutions of Examples 1, 2, 3 and 4, then dried with a heat gun. The sprayed boards were then imaged and the prints were evaluated for waterfastness, bleed, and print intensity. Solutions of the above examples were also evaluated on a pre-imaged substrate by spraying the printed substrates followed by drying.

The following table illustrates results obtained with the different coating solutions:

| I. Pre-Coating | | | |
|---|---|---|---|
| | Waterfastness | Bleed | Print Intensity |
| Ex.1 | 85-90% | Some | Enhanced |
| Ex.2 | 85-90% | Less Bleed | Enhanced |
| Ex.3 | 95-100% | No Bleed | Enhanced |
| Ex.4 | 95-100% | No Bleed | Enhanced |

| II. Post-Coating | | | |
|---|---|---|---|
| Ex.1 | 85-90% | Yes | No Change |
| Ex.2 | 85-90% | Less Bleed | No Change |
| Ex.3 | 95-100% | Min. Bleed | No Change |
| Ex.4 | 95-100% | Min. Bleed | No Change |

From these results, it is seen that ammonium sulfate has the additional advantage of reducing the pH, thus increasing the cationic character of EPI. This, in turn, enhances interaction with anionic dyes.

Therefore, in a preferred embodiment of the present invention, the aqueous coating solution comprises 0.5 to 10% (on 100% basis) of EPI, 0.05 to 0.5% of a surfactant, 0.5 to 5% of an electrolyte, and water.

The surfactant can be any nonionic, anionic, or cationic surfactant such as, for example, Surfynol 465, Surfynol TGE and Surfynol 104E. The surfactant in the coating fluid enhances wetting of highly hydrophobic substrates. Also, the electrolyte can be any water soluble inorganic salt, such as, for example, sodium sulfate or ammonium sulfate. The addition of salt to the coating solution decreases the solubility of the dye in the aqueous solution to allow an effective polymer/dye interaction to occur. Ammonium sulfate has the added advantage of lowering the pH, thus enhancing polymer/dye interaction. Other additives that are optionally included in the vehicle of the invention are a lower aliphatic alcohol from 0-10% such as ethanol or IPA, and a biocide such as 1,2 - Benzoisothiazolin-2 one from 0-0.3%.

The coating solution may be applied by any suitable means, such as, for example, by spraying, roller arrangement, or application by a printhead positioned inline with the ink-applying printheads. When a printhead is used to apply the coating solution, the option exists of covering only the printed image area with the coating material, rather than the entire area of the substrate. After a post-coating application, the print can be dried, such as with a heat gun, to set the image.

Alternatively, the coating composition can be applied to the substrate prior to imaging, as a precoat material. Pre-coat application can provide the advantage of eliminating color-to-color bleed during imaging, since the dyes are fixed instantaneously as the ink contacts the pre-coated substrate. Furthermore, with pre-coating, images appear darker and have sharper edge definition, since the coating minimizes ink penetration and allows more fixed dyes on the surface. Finally, complete drying of the pre-coated substrate may not be necessary. Therefore, drying can be applied once after imaging, resulting in considerable savings in energy.

Imaging can be done on a continuous web of paper, wherein the paper is subjected to the coating material of the present invention. The various color heads are positioned behind each other so that they image sequentially on the paper as it passes underneath the head. In order to obtain high quality color images, multiple drops of each color ink are printed at each pixel location. The jet spacing is 240-300 dpi with an orifice diameter of 0.7 to 0.9 mil. The stimulation frequency is 100 kHz and all heads are synchronized. The web speed is typically 200-500 feet per minute accurately controlled.

When the images are printed prior to application of the coating material, application of moisture to the print causes extreme bleed, to the point of almost complete color removal. However, when the coating material of the present invention is applied to the ink jet prints, and then dried, the images are close to 100% permanent even when sprayed with water. Alternatively, the coating material may be applied as a pre-print coat to the substrate, i.e., prior to imaging, with substantially equivalent results.

As will be obvious to anyone skilled in the art, the components that comprise the coating are commercially available. It is also understood and known in the art that waterfastness is dye specific, resulting in variations in the amount of waterfastness achieved, particularly when varying the inks being applied to the substrate. Almost all ink jet inks applied on a variety of commodity substrates give vastly varying image quality. Differences occur in optical density, brilliance, permanence, drying and dot resolution. The substrate coating composition of the present invention is particularly adaptable for printing permanent images on cardboards which are used to build boxes. Another application is to treat textile materials printed with direct dyes. Direct dyes have very poor waterfastness on cellulosic fabrics. Treatment of the fabric with the coating solution of the present invention can produce fabrics with excellent waterfastness.

## Claims

1. A material comprising a porous substrate,for use with an inkjet printing system, which material is obtainable by applying a coating composition to the porous substrate before or after printing images on the substrate, in order to enhance the permanence of ink jet imaging on the material, the coating composition comprising a liquid vehicle, an ethoxylated polyethyleneimine polymer, a surfactant, and an electrolyte.

2. The material of claim 1, obtainable by printing an image on the material and then applying the composition over the image.

3. The material of claim 1 wherein the material is unimaged.

4. A material as claimed in claim 1, obtainable by coating the entire area of the substrate with the coating composition, or only the printed image area.

5. A material as claimed in claim 4 wherein the surfactant is present in an amount of about 0.05% to 0.5% by weight.

6. A material as claimed in claim 1 wherein the electrolyte comprises a water soluble inorganic salt.

7. A material as claimed in claim 6 wherein the electrolyte is present in an amount of about 1.0% to 5% by weight.

8. A material as claimed in claim 1 further comprising a lower aliphatic alcohol.

9. A material as claimed in claim 1 further comprising a biocide.

10. A method of printing comprising printing an image on a material, comprising a porous substrate, using an ink jet ink comprising a dye, which substrate has been coated prior to imaging with a composition comprising a liquid vehicle, an ethoxylated polyethyleneimine polymer, a surfactant, and an electrolyte,in order to enhance the permanence of ink jet imaging on the material.

## Patentansprüche

1. Material mit einem porösen Substrat zur Verwendung in einem Tintenstrahldrucksystem, wobei das Material zur Verbesserung der Dauerhaftigkeit der Tintenstrahlbebilderung auf dem Material durch Aufbringen einer Beschichtungskomposition auf das poröse Substrat vor oder nach dem Drucken von Bildern auf das Substrat erhalten werden kann, und wobei die Beschichtungskomposition ein flüssiges Bindemittel, ein ethoxyliertes Polyethylenimin-Polymer, ein Tensid und einen Elektrolyten umfasst.

2. Material nach Anspruch 1, worin es durch Drucken eines Bildes auf das Material und anschließendes Aufbringen der Komposition auf das Bild erhalten wird.

3. Material nach Anspruch 1, worin das Material unbebildert ist.

4. Material nach Anspruch 1, worin die gesamte Fläche des Substrats oder nur der bedruckte Bildbereich mit der Beschichtungskomposition beschichtet wird.

5. Material nach Anspruch 4, worin das Tensid in einer Menge von etwa 0,05 Gewichtsprozent bis 0,5 Gewichtsprozent vorliegt.

6. Material nach Anspruch 1, worin der Elektrolyt ein wasserlösliches anorganisches Salz umfasst.

7. Material nach Anspruch 6, worin der Elektrolyt in einer Menge von etwa 1,0 Gewichtsprozent bis 5 Gewichtsprozent vorliegt.

8. Material nach Anspruch 1, worin es ferner einen niederen aliphatischen Alkohol umfasst.

9. Material nach Anspruch 1, worin es ferner ein Biozid umfasst.

10. Verfahren zum Drucken, welches das Drucken eines Bildes auf ein ein poröses Substrat aufweisendes Material umfasst, unter Verwendung einer einen Farbstoff aufweisenden Tintenstrahltinte, wobei das Substrat zur Verbesserung der Dauerhaftigkeit der Tintenstrahlbebilderung auf dem Material vor der Bebilderung mit einer Komposition beschichtet wurde, die ein flüssiges Bindemittel, ein ethoxyliertes Polyethylenimin-Polymer, ein Tensid und einen Elektrolyten umfasst.

## Revendications

1. Matériau comprenant un substrat poreux, destiné à être utilisé avec un système d'impression à jet d'encre, lequel matériau peut être obtenu en appliquant une composition de revêtement au substrat poreux avant ou après l'impression d'images sur le substrat, de manière à améliorer la permanence de la formation d'image à jet d'encre sur le matériau, la composition de revêtement comprenant un véhicule liquide, un polymère de polyéthylèneimine éthoxylé, un tensioactif et un électrolyte.

2. Matériau selon la revendication 1, pouvant être obtenu en imprimant une image sur le matériau et en appliquant ensuite la composition sur une image.

3. Matériau selon la revendication 1, dans lequel le matériau n'est pas formé en image.

4. Matériau selon la revendication 1, pouvant être obtenu en appliquant sur toute la surface du substrat la composition de revêtement, ou bien uniquement sur la zone d'image imprimée.

5. Matériau selon la revendication 4, dans lequel le tensioactif est présent dans une proportion d'environ 0,05 % à 0,5 % en poids.

6. Matériau selon la revendication 1, dans lequel l'électrolyte comprend un sel inorganique soluble dans l'eau.

7. Matériau selon la revendication 6, dans lequel l'électrolyte est présent dans une proportion d'environ 1,0 % à 5 % en poids.

8. Matériau selon la revendication 1, comprenant en outre un alcool aliphatique de rang inférieur.

9. Matériau selon la revendication 1, comprenant en outre un biocide.

10. Procédé d'impression comprenant l'impression d'une image sur un matériau, comprenant un substrat poreux, l'utilisation d'une encre de jet d'encre comprenant un colorant, lequel substrat a été revêtu avant la formation d'image d'une composition comprenant un véhicule liquide, un polymère de polyéthylèneimine éthoxylé, un tensioactif et un électrolyte, de manière à améliorer la permanence de la formation d'image à jet d'encre sur le matériau.
